# EUROPEAN PATENT APPLICATION

(11) **EP 4 524 209 A1**
(43) Date of publication of application: **19.03.2025**
(21) Application number: 24199630.5
(22) Date of filing: 11.09.2024
(51) Int. Cl.: C09D 5/18, C09D 7/63, C09D 7/40, C09D 163/00, C09D 183/04

(54) **BARRIER COATINGS HAVING HIGH TEMPERTATURE RESISTANCE AND INSULATING PROPERTIES**

(30) Priority: 12.09.2023 US 202318367028
(71) Applicant: Freudenberg-NOK General Partnership, Plymouth, MI 48170-2455 (US)
(72) Inventor: Oyer, Ursula, Canton, MI 48188 (US); Szparagowski, Raymond L., Bowling Green, OH 43402 (US); Hochgesang, Paul J., Ann Arbor, MI 48103 (US)
(74) Representative: Schaumburg und Partner Patentanwälte mbB

(57) **Abstract**

A barrier coating having high temperature resistance and insulating properties includes an insulating resin, a flame retardant, and a reinforcing fiber. The insulating resin includes high-consistency silicone rubber, epoxy, or a combination of high-consistency silicone rubber and epoxy. The flame retardant includes a first flame retardant and a second flame retardant, one of the first and second flame retardants including an intumescent. The intumescent includes melamine powder, expandable graphite, or a combination of melamine powder and expandable graphite. The other flame retardant includes ammonium polyphosphate. The reinforcing fiber includes aromatic polyamide, poly-paraphenyleneterephthalamide, or a combination of aromatic polyamide and poly-paraphenyleneterephthalamide.

## Description

### FIELD

The present disclosure provides barrier coatings having high temperature resistance and also insulating properties that may be applied to substrates defining structures that are used in areas of combustion or areas adjacent thereto.

### BACKGROUND

Materials having fire resistant or containment properties are useful in a variety of commercial applications. Such materials may be used, for example, to prevent or reduce the combustion of a structure and/or to contain combustion of adjacent materials, such as materials housed or contained within the structure. Different uses may require the material to take a variety of shapes and configurations. It may be desirable to provide a coating that can be applied to different substrates to provide the fire resistant or containment properties without requiring changes to underlying substrates.

### SUMMARY

In various aspects, the present disclosure provides a barrier coating having high temperature resistance and insulating properties. The barrier coating may include an insulating resin, a flame retardant, and a reinforcing fiber.

In at least one example embodiment, the insulating resin includes high-consistency silicone rubber, epoxy, or a combination of high-consistency silicone rubber and epoxy.

In at least one example embodiment, the barrier coating includes greater than or equal to about 25 wt.% to less than or equal to about 55 wt.% of the insulating resin.

In at least one example embodiment, the flame retardant includes a first flame retardant and a second flame retardant, where one of the first and second flame retardants includes an intumescent.

In at least one example embodiment, the first flame retardant includes the intumescent and the barrier coating includes greater than or equal to about 5 wt.% to less than or equal to about 35 wt.% of the first flame retardant.

In at least one example embodiment, the intumescent includes melamine powder, expandable graphite, or a combination of melamine powder and expandable graphite.

In at least one example embodiment, the barrier coating includes greater than or equal to about 15 wt.% to less than or equal to about 55 wt.% of the second flame retardant.

In at least one example embodiment, the second flame includes ammonium polyphosphate.

In at least one example embodiment, the reinforcing fiber includes aromatic polyamide, poly-paraphenyleneterephthalamide, or a combination of aromatic polyamide and poly-paraphenyleneterephthalamide.

In at least one example embodiment, the barrier coating includes greater than or equal to about 1 wt.% to less than or equal to about 10 wt.% of the reinforcing fiber.

In various other aspects, the present disclosure provides a method for preparing a barrier coating having high temperature resistance and insulating properties on one or more surfaces of a substrate. The method may include contacting a barrier coating formulation to the one or more surfaces of the substrate. The barrier coating formulation may include an insulating resin, a flame retardant, a reinforcing fiber, a curative agent, and a solvent.

In at least one example embodiment, the insulating resin includes high-consistency silicone rubber, epoxy, or a combination of high-consistency silicone rubber and epoxy.

In at least one example embodiment, the flame retardant includes melamine powder, ammonium polyphosphate, expandable graphite, or any combination thereof.

In at least one example embodiment, the curative agent includes di(2,4,dichlorobenzyoyl)peroxide.

In at least one example embodiment, the solvent includes methyl ethyl ketone, toluene, or a combination of the methyl ethyl ketone and toluene.

In at least one example embodiment, the formulation includes greater than or equal to about 30 wt.% to less than or equal to about 50 wt.% of the insulating resin, greater than or equal to about 36 wt.% to less than or equal to about 76 wt.% of the flame retardant, greater than or equal to about 1 wt.% to less than or equal to about 10 wt.% of the reinforcing fiber, and greater than or equal to about 1 wt.% to less than or equal to about 3 wt.% of the curative agent.

In at least one example embodiment, the method further includes preparing the barrier coating formulation, where the preparing includes contacting the insulating resin to the solvent to form a flowable material, contacting the flame retardant to the flowable material, and contacting the reinforcing fiber to the flowable material.

In at least one example embodiment, the solvent is a first solvent and the preparing further includes contacting a second solvent to the flowable material.

In at least one example embodiment, the preparing further includes contacting the curative agent to the flowable material.

In at least one example embodiment, the method further includes curing an as contacted barrier coating formulation, wherein the curing includes heating the substrate to a temperature greater than or equal to about 120 °C for a time period greater than or equal to about 20 minutes.

### DRAWINGS

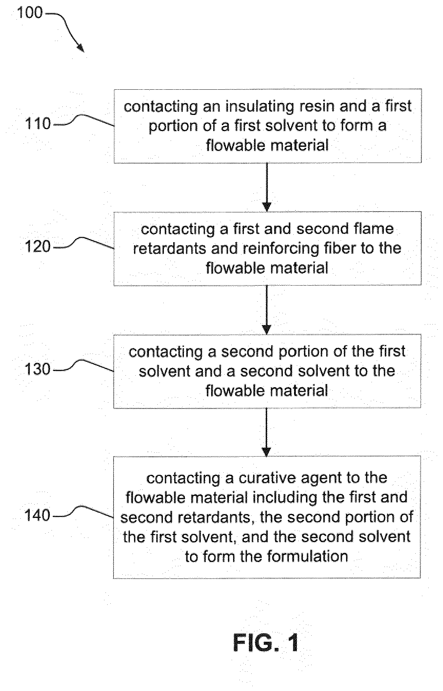

FIG. 1 is a flowchart illustrating an example method for forming a formulation for use applying a barrier coating to a substrate to impart both the high temperature resistance and the insulating properties in accordance with at least one example embodiment of the present disclosure;

It should be noted that the figures set forth herein are intended to exemplify the general characteristics of devices among those of the present technology, for the purpose of the description of certain embodiments. These figures may not precisely reflect the characteristics of any given embodiment and are not necessarily intended to define or limit specific embodiments within the scope of this technology.

### DETAILED DESCRIPTION

The following description of technology is merely exemplary in nature of the subject matter, manufacture, and use of one or more inventions and is not intended to limit the scope, application, or uses of any specific invention claimed in this application or in such other applications as may be filed claiming priority to this application or patents issuing therefrom. A non-limiting discussion of terms and phrases intended to aid understanding of the present technology is provided at the end of this Detailed Description.

The present disclosure provides barrier coatings having high temperature resistance and also insulating properties, including, for example, at and after exposure to 1,200 °C. Barrier coatings in accordance with various embodiments of the present disclosure are applied to different substrates to impart both high temperature resistance and insulating properties both before and after high temperature exposure. For example, barrier coatings in accordance with various embodiments of the present disclosure are applied to substrates used to form or defining structures used in the instance of heat affected systems (e.g., high-density batteries, including, for example, lithium batteries used in automotive and aerospace products). The substrates may include, for example, aluminum, copper, plastics, or any combination thereof. The barrier coatings may have average thicknesses greater than or equal to about 100 micrometers to less than or equal to about 2,000 micrometers.

Barrier coatings in accordance with various embodiments of the present disclosure include insulating resins and flame retardants. Barrier coatings in accordance with various embodiments of the present disclosure may also include reinforcing fibers. Formulations in accordance with various embodiment of the present disclosure for applying the barrier coatings to the different substrates to impart both the high temperature resistance and the insulating properties may include curative agents and solvents in addition to the insulating resin and the flame retardants and also the reinforcing fibers. Methods for preparing barrier coatings may include applying the formulations to one or more surfaces of the different substrates. The methods may also include curing the as-applied formulation and/or preparing the formulation.

### Insulating Resins

Barrier coatings in accordance with various embodiments of the present disclosure may include one or more insulating resins. Barrier coatings in accordance with the present disclosure may include high-consistency silicone rubbers, epoxy resins, or a combination of high-consistency silicon rubbers and epoxy resins as the one or more insulating resins. The high-consistency silicone rubber, when charged, is non-conductive and insulating. In at least one example embodiment, the high-consistency silicon rubber may be peroxide cured.

Barrier coatings in accordance with the present disclosure may include, expressed as a percent by weight of the as-applied barrier coating, greater than or equal to about 25 wt.% to less than or equal to about 55 wt.%, optionally greater than or equal to about 30 wt.% to less than or equal to about 50 wt.%, and optionally about 41 wt.%, of a total amount of the one or more insulating resins. Barrier coatings in accordance with the present disclosure may include, expressed as a percent by volume of the as-applied barrier coating, greater than or equal to about 20 vol.% to less than or equal to about 65 vol.%, optionally greater than or equal to about 30 vol.% to less than or equal to about 50 vol.%, and optionally about 32.54 vol.%, of a total amount of the one or more insulating resins.

Formulations for applying the barrier coatings to the different substrates to impart both the high temperature resistance and the insulating properties may include, expressed as a percent by weight of the as-applied barrier coating, greater than or equal to about 8 wt.% to less than or equal to about 28 wt.%, and optionally about 18.82 wt.%, of a total amount of the one or more insulating resins. Formulations for applying the barrier coatings to the different substrates to impart both the high temperature resistance and the insulating properties may include, expressed as a percent by volume of the as-applied barrier coating, greater than or equal to about 5 vol.% to less than or equal to about 35 vol.%, optionally greater than or equal to about 8 vol.% to less than or equal to about 28 vol.%, and optionally about 14.57 vol.%, of a total amount of the one or more insulating resins.

### Flame Retardants

Barrier coatings in accordance with various embodiments of the present disclosure may include one or more flame retardants. Barrier coatings in accordance with the present disclosure may include melamine powder, ammonium polyphosphate, expandable graphite, or any combination thereof. For example, in at least one example embodiment, barrier coatings in accordance with the present disclosure may include first flame retardants (e.g., melamine powder and/or expandable graphite) and second flame retardants (e.g., ammonium polyphosphate), where the first flame retardants are intumescents that may expand as a result of heat exposure to form a protective barrier and the second flame retardants may help to prevent flames and delays burn. The intumescents may expand by 50 % or more (e.g., from about 15 to about 30 times) upon exposure to combustion. The second flame retardants may have comparatively large nitrogen contents causing the second flame retardants to act as blowing agents that dilute oxygen concentration near flames. For example, when exposed to heat, ammonium polyphosphate, may form a carbon rich foam at the surface that can prevent access of oxygen helping to stop combustion processes and to thermally insulate.

### First Flame Retardant

Barrier coatings in accordance with the present disclosure may include melamine powder, expandable graphite, or a combination of melamine powder and expandable graphite as the first flame retardant or intumescent.

Barrier coatings in accordance with the present disclosure may include, expressed as a percent by weight of the as-applied barrier coating, greater than or equal to about 5 wt.% to less than or equal to about 35 wt.%, optionally greater than or equal to about 8 wt.% to less than or equal to about 28 wt.%, optionally greater than or equal to about 10 wt.% to less than or equal to about 20 wt.%, and optionally about 18 wt.%, of a total amount of the first flame retardant. Barrier coatings in accordance with the present disclosure may include, expressed as a percent by volume of the as-applied barrier coating, greater than or equal to about 5 vol.% to less than or equal to about 35 vol.%, optionally greater than or equal to about 8 vol.% to less than or equal to about 28 vol.%, and optionally about 10.01 vol.%, of a total amount of the first flame retardant.

Formulations for applying the barrier coatings to the different substrates to impart both the high temperature resistance and the insulating properties may include, expressed as a percent by weight of the as-applied barrier coating, greater than or equal to about 3 wt.% to less than or equal to about 15 wt.%, and optionally about 8.24 wt.%, of a total amount of the first flame retardant. Formulations for applying the barrier coatings to the different substrates to impart both the high temperature resistance and the insulating properties may include, expressed as a percent by volume of the as-applied barrier coating, greater than or equal to about 3 vol.% to less than or equal to about 15 vol.%, and optionally about 4.47 vol.%, of a total amount of the first flame retardant.

### Second Flame Retardant

Barrier coatings in accordance with the present disclosure may include ammonium polyphosphate as a second flame retardant.

Barrier coatings in accordance with the present disclosure may include, expressed as a percent by weight of the as-applied barrier coating, greater than or equal to about 15 wt.% to less than or equal to about 55 wt.%, optionally greater than or equal to about 28 wt.% to less than or equal to about 48 wt.%, and optionally about 38.4 wt.%, of a total amount of the second flame retardant. Barrier coatings in accordance with the present disclosure may include, expressed as a percent by volume of the as-applied barrier coating, greater than or equal to about 15 vol.% to less than or equal to about 55 vol.%, optionally greater than or equal to about 28 vol.% to less than or equal to about 48 vol.%, and optionally about 55.87 vol.%, of a total amount of the second flame retardant.

Formulations for applying the barrier coatings to the different substrates to impart both the high temperature resistance and the insulating properties may include, expressed as a percent by weight of the as-applied barrier coating, greater than or equal to about 5 wt.% to less than or equal to about 35 wt.%, optionally greater than or equal to about 8 wt.% to less than or equal to about 28 wt.%, and optionally about 17.65 wt.%, of a total amount of the second flame retardant. Formulations for applying the barrier coatings to the different substrates to impart both the high temperature resistance and the insulating properties may include, expressed as a percent by volume of the as-applied barrier coating, greater than or equal to about 5 vol.% to less than or equal to about 35 vol.%, optionally greater than or equal to about 8 vol.% to less than or equal to about 28 vol.%, and optionally about 25.05 vol.%, of a total amount of the second flame retardant.

### Reinforcing Fibers

Barrier coatings in accordance with various embodiments of the present disclosure may include one or more reinforcing fibers. Reinforcing fibers may help to improve the flow of the barrier coatings and may also help to provide structure to the barrier coatings.

Barrier coatings in accordance with the present disclosure may include aromatic polyamide (also known as aramid fibers), poly-paraphenyleneterephthalamide, or a combination of aromatic polyamide and poly-paraphenyleneterephthalamide as a reinforcing fiber.

Barrier coatings in accordance with the present disclosure may include, expressed as a percent by weight of the as-applied barrier coating, greater than or equal to about 1 wt.% to less than or equal to about 10 wt.%, optionally greater than or equal to about 2 wt.% to less than or equal to about 8 wt.%, optionally greater than or equal to about 2 wt.% to less than or equal to about 6 wt.%, optionally greater than or equal to about 2 wt.% to less than or equal to about 3 wt.%, and optionally about 2.6 wt.%, of a total amount of the one or more reinforcing fibers. Barrier coatings in accordance with the present disclosure may include, expressed as a percent by volume of the as-applied barrier coating, greater than or equal to about 1 vol.% to less than or equal to about 10 vol.%, optionally greater than or equal to about 2 vol.% to less than or equal to about 8 vol.%, optionally greater than or equal to about 2 vol.% to less than or equal to about 6 vol.%, optionally greater than or equal to about 2 vol.% to less than or equal to about 3 vol.%, and optionally about 1.58 vol.%, of a total amount of the one or more reinforcing fibers.

Formulations for applying the barrier coatings to the different substrates to impart both the high temperature resistance and the insulating properties may include, expressed as a percent by weight of the as-applied barrier coating, greater than or equal to about 0 wt.% to less than or equal to about 6 wt.%, optionally greater than or equal to about 0.5 wt.% to less than or equal to about 6 wt.%, optionally greater than or equal to about 0.5 wt.% to less than or equal to about 3 wt.%, and optionally about 1.18 wt.%, of a total amount of the one or more reinforcing fibers. Formulations for applying the barrier coatings to the different substrates to impart both the high temperature resistance and the insulating properties may include, expressed as a percent by volume of the as-applied barrier coating, greater than or equal to about 0 vol.% to less than or equal to about 6 vol.%, optionally greater than or equal to about 0.5 vol.% to less than or equal to about 6 vol.%, optionally greater than or equal to about 0.5 vol.% to less than or equal to about 3 vol.%, and optionally about 0.70 vol.%, of a total amount of the one or more reinforcing fibers.

### Curative Agent

Formulations in accordance with various embodiments of the present disclosure for applying the barrier coatings to the different substrates to impart both the high temperature resistance and the insulating properties may include one or more curative agents. Curative agents may help to initiating and improve cross-linking between other components of the formulation.

Formulations for applying barrier coatings to substrates may include di(2,4,dichlorobenzyoyl)peroxide as a curative agent.

Formulation for applying the barrier coatings to the different substrates to impart both the high temperature resistance and the insulating properties may include, expressed as a percent by weight of the as-applied barrier coating, greater than or equal to about 0.5 wt.% to less than or equal to about 6 wt.%, optionally greater than or equal to about 1 wt.% to less than or equal to about 3 wt.%, and optionally about 1.18 wt.%, of a total amount of the one or more curative agents. Formulations for applying the barrier coatings to the different substrates to impart both the high temperature resistance and the insulating properties may include, expressed as a percent by volume of the as-applied barrier coating, greater than or equal to about 0.5 vol.% to less than or equal to about 6 vol.%, optionally greater than or equal to about 1 vol.% to less than or equal to about 3 vol.%, and optionally about 0.85 vol.%, of a total amount of the one or more curative agents.

### Solvents

Formulations in accordance with various embodiments of the present disclosure for applying the barrier coatings to the different substrates to impart both the high temperature resistance and the insulating properties may include one or more solvents. Solvents help to ensure coatability of the formulations and barrier coatings.

Formulations for applying barrier coatings to substrates may include methyl ethyl ketone, toluene, or a combination of the methyl ethyl ketone and toluene as the solvent. For example, in at least one example embodiment, formulations in accordance with the present disclosure may include a first solvent and a second solvent.

### First Solvent

Formulations for applying barrier coatings to substrates may include methyl ethyl ketone as a first solvent.

Formulation for applying the barrier coatings to the different substrates to impart both the high temperature resistance and the insulating properties may include, expressed as a percent by weight of the as-applied barrier coating, greater than or equal to about 15 wt.% to less than or equal to about 65 wt.%, optionally greater than or equal to about 30 wt.% to less than or equal to about 50 wt.%, and optionally about 35.28 wt.%, of a total amount of the first solvent. Formulations for applying the barrier coatings to the different substrates to impart both the high temperature resistance and the insulating properties may include, expressed as a percent by volume of the as-applied barrier coating, greater than or equal to about 15 vol.% to less than or equal to about 65 vol.%, optionally greater than or equal to about 30 vol.% to less than or equal to about 50 vol.%, and optionally about 37.09 vol.%, of a total amount of the first solvent.

Although example ranges are provided, it should be appreciated that the amount of the first solvent as include in the formulation may be varied depending on a targeted application of the barrier coatings and/or method of application of the formulations to form the barrier coatings.

### Second Solvent

Formulations for applying barrier coatings to substrates may include toluene as a second solvent.

Formulation for applying the barrier coatings to the different substrates to impart both the high temperature resistance and the insulating properties may include, expressed as a percent by weight of the as-applied barrier coating, greater than or equal to about 5 wt.% to less than or equal to about 50 wt.%, optionally greater than or equal to about 10 wt.% to less than or equal to about 30 wt.%, and optionally about 17.65 wt.%, of a total amount of the second solvent. Formulations for applying the barrier coatings to the different substrates to impart both the high temperature resistance and the insulating properties may include, expressed as a percent by volume of the as-applied barrier coating, greater than or equal to about 5 vol.% to less than or equal to about 50 vol.%, optionally greater than or equal to about 10 vol.% to less than or equal to about 30 vol.%, and optionally about 17.28 vol.%, of a total amount of the second solvent.

Although example ranges are provided, it should be appreciated that the amount of the second solvent as include in the formulation may be varied depending on a targeted application of the barrier coatings and/or method of application of the formulations to form the barrier coatings.

### Method for Forming the Formulation

Methods for forming the formulations for use applying the barrier coatings to the different substrates to impart both the high temperature resistance and the insulating properties may include forming flowable materials by contacting insulating resins and first solvents and then contacting flame retardants and also reinforcing fibers to the flowable materials. Second solvents may be contacted to the flowable materials, concurrently with or consecutively to the contacting of the flame retardants and/or the reinforcing fibers. The flame retardants, reinforcing fibers, and solvents may be contacted with the flowable materials in one or more intervals until incorporated. The curative agents may be contacted with the flowable materials to form the formulation when ready for application.

FIG. 1 illustrates an example method 100 for forming a formulation for use applying a barrier coating to a substrate to impart both the high temperature resistance and the insulating properties. As illustrated, the method 100 may include contacting 110 an insulating resin (e.g., high-consistency silicon rubber, peroxide cured) and a first portion of a first solvent (e.g., methyl ethyl ketone) to form a flowable material. In at least one example embodiment, the contacting 110 may include dissolving the insulating resin in the first portion of the first solvent. The insulating resin may be dissolved in the first portion of the first solvent by adding the insulating resin to the first solvent and allowing the combination to stand for a period of time, after which a mixing force may be applied, for example, using a speed/spin mixer.

The method 100 includes contacting 120 a first flame retardant (e.g., melamine powder), a second flame retardant (e.g., ammonium polyphosphate), and a reinforcing fiber (e.g., aromatic polyamide) to the flowable material. In at least one example embodiment, the contacting 120 may including adding the first flame retardant, the second retardant, and/or the reinforcing fiber in powder form, concurrently or consecutively, to the flowable material. In at least one example embodiment, a mixing force may be applied between each addition, for example, using a speed/spin mixer.

The method 100 includes contacting 130 a second portion of the first solvent and a second solvent (e.g., toluene) to the flowable material. Although illustrated as following the contacting 120 of the first flame retardant, the second retardant, and the reinforcing fiber to the flowable material, it should be appreciated that the second portion of the first solvent and/or the second solvent may be contacted 130 to the flowable material concurrently with or consecutively to the first flame retardant, the second retardant, and/or the reinforcing fiber. The second portion of the first solvent may be contacted 130 to the flowable material concurrently with or consecutively to the second solvent. Although a second solvent is discussed, it should be appreciated that, in at least one example embodiment, the second solvent and methods steps related thereto may be omitted.

The combination including the insulating resin, the first and second flame retardants, the reinforcing fiber, and the first and second solvents may be stored. Prior to application to the substrate, the method 100 includes contacting 140 a curative agent (*e.g.,* di(2,4,dichlorobenzyoyl)peroxide) to the flowable material further including the first and second retardants, the second portion of the first solvent, and the second solvent to form the formulation. The contacting 140 may include added to the flowable material further including the first and second retardants, the second portion of the first solvent, and the second solvent and a mixing force may be applied, for example, using a speed/spin mixer.

### Methods of Applying Formulations

In at least one example embodiment, formulations may be applied to substrates using dip-coating processes. For example, a substrate (or portion thereof) may be contacted with and submerged in a formulation. Once removed, the substrate may be dried, but not cured, to allow thickness to be checked. Afterwards, the substrate may be contacted with and submerged in the formulation one or more, more times to achieve a desired thickness.

In at least one example embodiments, formulations may be applied to substrates using a spray-coating process. For example, a substrate (or portion thereof) may be sprayed with a formulation. In at least one example embodiment, the viscosity of the formulation may be adjusted, for example, by adding more of the first solvent and/or second solvent, to permit spraying. Once sprayed, the substrate may be dried, but not cured, to allow thickness to be checked. Afterwards, the substrate may be sprayed again, as needed to achieve a desired thickness.

### Method of Curing As-Applied Formulations to Form Barrier Coatings

Curing formulations as applied to one or more surfaces of different substrates may include heating the coated substrates (or portion thereof) to a temperature greater than or equal to about 120 °C for a time period greater than or equal to about 20 minutes.

### Non-limiting Discussion of Terminology

The foregoing description is merely illustrative in nature and is in no way intended to limit the technology, its application, or uses. The broad teachings of the technology can be implemented in a variety of forms. Therefore, while this technology includes particular examples, the true scope of the technology should not be so limited since other modifications will become apparent upon a study of the drawings, the specification, and the following claims.

The headings (such as "Background" and "Summary") and sub-headings used herein are intended only for general organization of topics within the present technology and are not intended to limit the technology of the technology or any aspect thereof. In particular, subject matter disclosed in the "Background" may include novel technology and may not constitute a recitation of prior art. Subject matter disclosed in the "Summary" is not an exhaustive or complete technology of the entire scope of the technology or any embodiments thereof. Classification or discussion of a material within a section of this specification as having a particular utility is made for convenience, and no inference should be drawn that the material must necessarily or solely function in accordance with its classification herein when it is used in any given composition.

It should be understood that one or more steps within a method may be executed in different order (or concurrently) without altering the principles of the present technology. Further, although each of the embodiments is described above as having certain features, any one or more of those features described with respect to any embodiment of the technology can be implemented in and/or combined with features of any of the other embodiments, even if that combination is not explicitly described. In other words, the described embodiments are not mutually exclusive, and permutations of one or more embodiments with one another remain within the scope of this technology. For example, a component which may be A, B, C, D or E, or combinations thereof, may also be defined, in some embodiments, to be A, B, C, or combinations thereof.

As used herein, the phrase at least one of A, B, and C should be construed to mean a logical (A or B or C), using a non-exclusive logical OR, and should not be construed to mean "at least one of A, at least one of B, and at least one of C."

As used herein, the words "prefer" or "preferable" refer to embodiments of the technology that afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the technology.

As used herein, the word "include," and its variants, is intended to be non-limiting, such that recitation of items in a list is not to the exclusion of other like items that may also be useful in the materials, compositions, devices, and methods of this technology. Similarly, the terms "can" and "may" and their variants are intended to be non-limiting, such that recitation that an embodiment can or may comprise certain elements or features does not exclude other embodiments of the present technology that do not contain those elements or features.

Although the open-ended term "comprising," as a synonym of non-restrictive terms such as including, containing, or having, is used herein to describe and claim embodiments of the present technology, embodiments may alternatively be described using more limiting terms such as "consisting of" or "consisting essentially of." Thus, for any given embodiment reciting materials, components or process steps, the present technology also specifically includes embodiments consisting of, or consisting essentially of, such materials, components or processes excluding additional materials, components or processes (for consisting of) and excluding additional materials, components or processes affecting the significant properties of the embodiment (for consisting essentially of), even though such additional materials, components or processes are not explicitly recited in this application. For example, recitation of a composition or process reciting elements A, Band C specifically envisions embodiments consisting of, and consisting essentially of, A, B and C, excluding an element D that may be recited in the art, even though element D is not explicitly described as being excluded herein. Further, as used herein the term "consisting essentially of" recited materials or components envisions embodiments "consisting of' the recited materials or components.

"A" and "an" as used herein indicate "at least one" of the item is present; a plurality of such items may be present, when possible.

Unless specified otherwise, all percentages herein are by weight.

Numeric values stated herein should be understood to be approximate, and interpreted to be about the stated value, whether or not the value is modified using the word "about." Thus, for example, a statement that a parameter may have value "of X" should be interpreted to mean that the parameter may have a value of "about X. The term "about" indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates variations that may arise from ordinary methods of manufacturing, measuring, or using the material, device, or other object to which the calculation or measurement applies.

As referred to herein, ranges are, unless specified otherwise, inclusive of endpoints and include technology of all distinct values and further divided ranges within the entire range. Thus, for example, a range of "from A to B" or "from about A to about B" is inclusive of A and of B. Further, the phrase "from about A to about B" includes variations in the values of A and B, which may be slightly less than A and slightly greater than B; the phrase may be read be "about A, from A to B, and about B." Technology of values and ranges of values for specific parameters (such as temperatures, molecular weights, weight percentages, etc.) are not exclusive of other values and ranges of values useful herein.

It is also envisioned that two or more specific exemplified values for a given parameter may define endpoints for a range of values that may be claimed for the parameter. For example, if Parameter X is exemplified herein to have value A and also exemplified to have value Z, it is envisioned that Parameter X may have a range of values from about A to about Z. Similarly, it is envisioned that technology of two or more ranges of values for a parameter (whether such ranges are nested, overlapping, or distinct) subsume all possible combination of ranges for the value that might be claimed using endpoints of the disclosed ranges. For example, if Parameter X is exemplified herein to have values in the range of 1-10, or 2-9, or 3-8, it is also envisioned that Parameter X may have other ranges of values including 1-9, 1-8, 1-3, 1-2, 2-10, 2-8, 2-3, 3-10, and 3-9.

## Claims

1. A barrier coating having high temperature resistance and insulating properties, the barrier coating comprising:
an insulating resin,
a flame retardant, and
a reinforcing fiber.

2. The barrier coating of claim 1, wherein the insulating resin includes high-consistency silicone rubber, epoxy, or a combination of high-consistency silicone rubber and epoxy.

3. The barrier coating of claim 1, wherein the barrier coating includes greater than or equal to about 25 wt.% to less than or equal to about 55 wt.% of the insulating resin.

4. The barrier coating of claim 1, wherein the flame retardant includes a first flame retardant and a second flame retardant, one of the first and second flame retardants including an intumescent.

5. The barrier coating of claim 4, wherein the first flame retardant includes the intumescent and the barrier coating includes greater than or equal to about 5 wt.% to less than or equal to about 35 wt.% of the first flame retardant.

6. The barrier coating of claim 5, wherein the intumescent includes melamine powder, expandable graphite, or a combination of melamine powder and expandable graphite.

7. The barrier coating of claim 5, wherein the barrier coating includes greater than or equal to about 15 wt.% to less than or equal to about 55 wt.% of the second flame retardant.

8. The barrier coating of claim 5, wherein the second flame includes ammonium polyphosphate.

9. The barrier coating of claim 1, wherein the reinforcing fiber includes aromatic polyamide, poly-paraphenyleneterephthalamide, or a combination of aromatic polyamide and poly-paraphenyleneterephthalamide.

10. The barrier coating of claim 1, wherein the barrier coating includes greater than or equal to about 1 wt.% to less than or equal to about 10 wt.% of the reinforcing fiber.

11. A method for preparing a barrier coating having high temperature resistance and insulating properties on one or more surfaces of a substrate, the method including:
contacting a barrier coating formulation to the one or more surfaces of the substrate, wherein the barrier coating formulation includes:
an insulating resin,
a flame retardant,
a reinforcing fiber,
a curative agent, and
a solvent.

12. The method of claim 11, wherein the insulating resin includes high-consistency silicone rubber, epoxy, or a combination of high-consistency silicone rubber and epoxy.

13. The method of claim 11, wherein the flame retardant includes melamine powder, ammonium polyphosphate, expandable graphite, or any combination thereof.

14. The method of claim 11, wherein the curative agent includes di(2,4,dichlorobenzyoyl)peroxide.

15. The method of claim 11, wherein the solvent includes methyl ethyl ketone, toluene, or a combination of the methyl ethyl ketone and toluene.
